# EUROPEAN PATENT APPLICATION

(11) **EP 4 722 576 A1**
(43) Date of publication of application: **08.04.2026**
(21) Application number: 24811200.5
(22) Date of filing: 24.05.2024
(51) Int. Cl.: F16L 37/088

(54) **CONNECTION STRUCTURE OF PIPE JOINT AND PIPE JOINT**

(30) Priority: 25.05.2023 JP 2023086520
(71) Applicant: Sanoh Industrial Co., Ltd., Shibuya-ku Tokyo 150-0002 (JP)
(72) Inventor: SHINBO, Takaya, Koga-shi, Ibaraki 306-0041 (JP)
(74) Representative: dompatent
(86) International application number: PCT/JP2024/019226
(87) International publication number: WO 2024/242196

(57) **Abstract**

A pipe joint connection structure is a connection structure for connecting a pipe joint to a connection target object having an internal flow path. The connection structure includes: a connection port that has a tubular shape and protrudes from a front surface of the connection target object; an insertion target portion that has a tubular shape and is provided at the pipe joint, and into which the connection port is inserted; a seal member that is disposed in the insertion target portion and seals a space between the connection port and the insertion target portion; a retaining portion that is provided at the front surface of the connection target object and has an opening at an inner side of which the connection port is disposed; and a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.

## Description

### Technical Field

The technique of the present disclosure relates to a pipe joint connection structure and a pipe joint.

### Background Art

As a structure for connecting a pipe joint to a connection target object having an internal flow path, there is known a structure in which a retaining portion is provided around a connection port of the connection target object to which a cylindrical portion of the pipe joint is connected, and a claw portion provided at the pipe joint is hooked on the retaining portion (see Japanese Patent No. 4158074, Japanese Patent No. 4186064, Japanese Patent Application Laid-Open (JP-A) No. 2005-127400, Japanese Patent Application Laid-Open (JP-A) No. 2005-133910, and Japanese Patent Application Laid-Open (JP-A) No. 2005-155665). In these Patent Literatures, the pipe joint includes a plurality of elastic arms extending along the axial direction of the cylindrical portion, and the claw portion provided at the outer periphery of a distal end of the elastic arm is configured to be hooked by the retaining portion.

### SUMMARY OF INVENTION

### Technical Problem

In the pipe joint, since the plurality of elastic arms extends along the axial direction of the cylindrical portion, each claw portion can be moved radial direction inward or outward of the cylindrical portion by bending each elastic arm. However, in order to bend the elastic arm, a predetermined length is required for the elastic arm. Therefore, in a case in which the length of the elastic arm is secured, it is difficult to reduce the protrusion height of the pipe joint from the connection target object.

An object of the disclosure is to provide a technique capable of reducing a protrusion height of a pipe joint from a connection target object.

### Solution to Problem

A pipe joint connection structure according to an aspect of the disclosure is a connection structure for connecting a pipe joint to a connection target object having an internal flow path. The connection structure includes: a connection port that has a tubular shape and protrudes from a front surface of the connection target object; an insertion target portion that has a tubular shape and is provided at the pipe joint, and into which the connection port is inserted; a seal member that is disposed in the insertion target portion and seals a space between the connection port and the insertion target portion; a retaining portion that is provided at the front surface of the connection target object and has an opening at an inner side of which the connection port is disposed; and a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.

A pipe joint connection structure according to another aspect of the disclosure is a connection structure for connecting a pipe joint to a connection target object having an internal flow path. The connection structure includes: a connection port that has a tubular shape and protrudes from a front surface of the connection target object; an insertion target portion that has a tubular shape and is provided at the pipe joint, and into which the connection port is inserted; a retaining portion that is provided at the front surface of the connection target object and has an opening at an inner side of which the connection port is disposed; a holding member that is disposed between the front surface of the connection target object and a distal end of the connection port, is mounted at an outer periphery of the insertion target portion, and holds a connection state between the insertion target portion and the connection port by being hooked on an edge portion of the opening; and a seal member that is disposed to overlap with the holding member in an axial direction at a radial direction inner side of the holding member and that seals a space between the insertion target portion and the connection port in the insertion target portion.

A pipe joint according to still another aspect of the disclosure is connected to a connection target object that includes an internal flow path, a connection port that has a tubular shape and protrudes from a front surface, and a retaining portion that is provided at the front surface and has an opening at an inner side of which the connection port is disposed. The pipe joint includes: an insertion target portion that has a tubular shape and into which the connection port is inserted; a seal member that is disposed in the insertion target portion and seals a space between the connection port and the insertion target portion; and a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion. Advantageous Effects of Invention

As described above, according to the disclosure, it is possible to reduce the protrusion height of the pipe joint from the connection target object.

### BRIEF DESCRIPTION OF DRAWINGS

Fig. 1 is a perspective view illustrating a connection part between a pipe joint and a connection target object for describing a pipe joint connection structure according to an embodiment of the disclosure.
Fig. 2 is an exploded perspective view obtained by exploding members constituting the pipe joint connection structure illustrated in Fig. 1.
Fig. 3 is a cross-sectional view obtained by cutting out the connection part between the pipe joint and the connection target object of Fig. 1 along an axial direction of the pipe joint.
Fig. 4 is an exploded cross-sectional view obtained by exploding members constituting the pipe joint connection structure illustrated in Fig. 3.
Fig. 5 is a plan view of the pipe joint illustrated in Fig. 1.
Fig. 6 is a side view of the pipe joint illustrated in Fig. 5.
Fig. 7 is a plan view of a retaining portion before the pipe joint is connected to the connection target object.
Fig. 8 is a plan view of the retaining portion after the pipe joint is connected to the connection target object.
Fig. 9 is a cross-sectional view (cross-sectional view corresponding to Fig. 2) illustrating a state in which a diameter of a retainer is reduced in a case in which the pipe joint is connected to the connection target object.
Fig. 10 is a cross-sectional view (cross-sectional view corresponding to Fig. 2) illustrating a state in which the diameter of the retainer is reduced in a case in which the pipe joint is removed from the connection target object.
Fig. 11 is a plan view of the retainer illustrating a diameter-reduced state and a diameter-extended state of the retainer illustrated in Fig. 2.
Fig. 12 is a cross-sectional view obtained by cutting out a connection part between a pipe joint and a connection target object along an axial direction of the pipe joint for describing the pipe joint connection structure according to another embodiment of the disclosure.

### DESCRIPTION OF EMBODIMENTS

Hereinafter, modes for carrying out the disclosure will be described with reference to the drawings. Components denoted by the same reference signs in the drawings mean the same or similar components. Repetitive descriptions and reference signs in the embodiments described below may be omitted. In addition, the drawings used in the following description are all schematic, and dimensional relationships of respective elements, ratios of respective elements, and the like illustrated in the drawings do not necessarily coincide with actual ones. In addition, dimensional relationships of the respective elements, ratios of the respective elements, and the like do not necessarily coincide among a plurality of drawings.

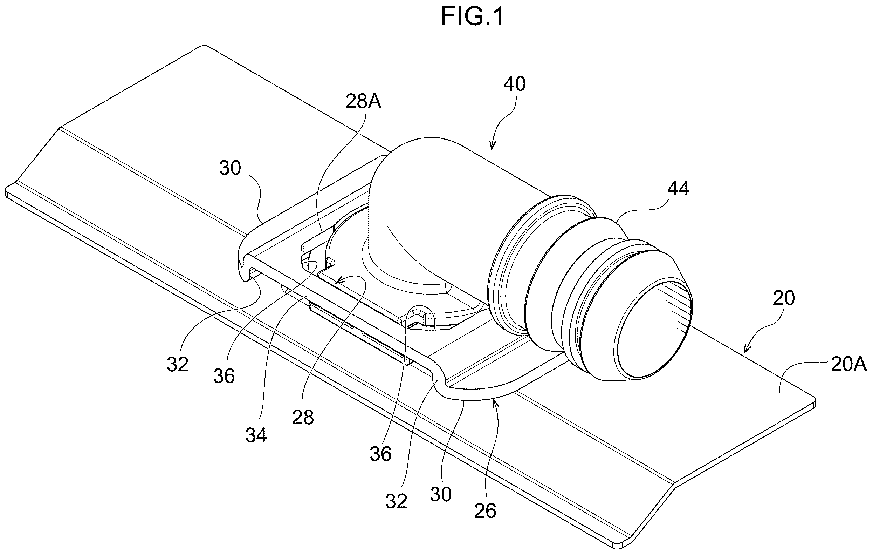

Figs. 1 to 11 illustrate a connection structure S1 (hereinafter, referred to as a "connection structure S1", if appropriate) of a pipe joint according to an embodiment of the disclosure.

The connection structure S1 in the present embodiment is a structure for connecting a connection target object 20 and a pipe joint 40. Hereinafter, the connection target object 20 and the pipe joint 40 will be described.

### <Connection Target Object 20>

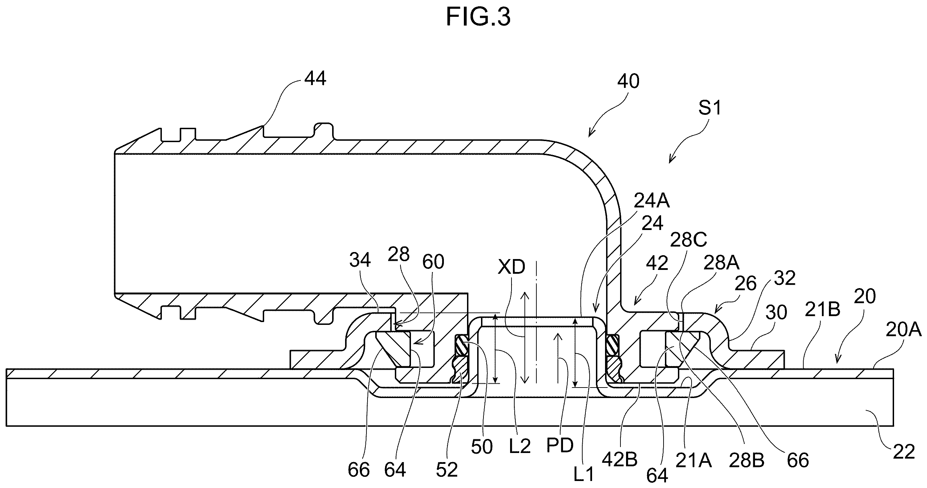

As illustrated in Figs. 1 and 3, the connection target object 20 is a target object to which the pipe joint 40 is connected. The connection target object 20 includes a flow path 22 inside. Examples of the connection target object 20 include a heat exchanger. As an example, the connection target object 20 in the present embodiment is a heat exchanger (cooling device) through which a refrigerant is circulated. The connection target object 20 is disposed in, for example, an automobile and used for cooling equipment constituting the automobile. In Figs. 1 to 4 and the like, only one plate member constituting a front surface 20A of the connection target object 20 is illustrated. One plate member constituting the front surface 20A of the connection target object 20 and the other plate member constituting the back surface are assembled, thereby forming the flow path 22 inside.

The connection target object 20 in the present embodiment is formed of a metal material having excellent thermal conductivity.

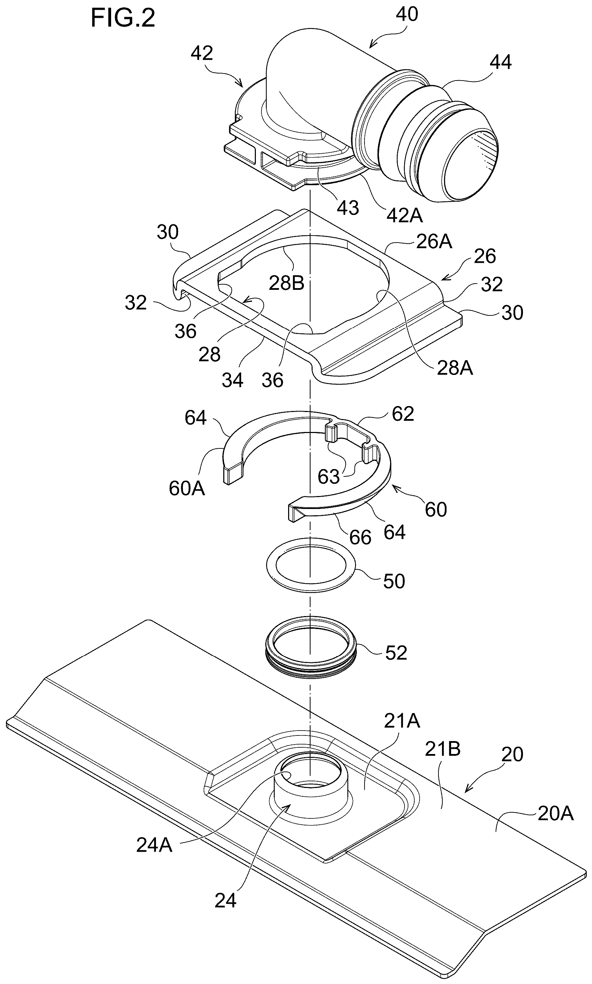

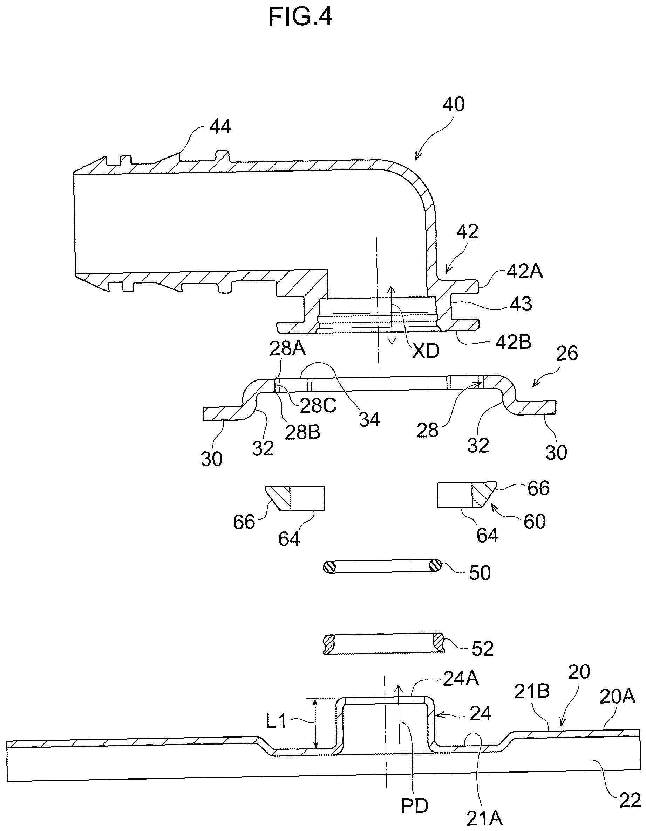

As illustrated in Figs. 2 and 4, the connection target object 20 includes the flow path 22, a connection port 24, and a retaining portion 26.

### (Connection Port 24)

The connection port 24 is a cylindrical mouth portion protruding from the front surface 20A of the connection target object 20. The inside of the connection port 24 communicates with the flow path 22. Therefore, in a case in which the connection port 24 is inserted into an insertion target portion 42 (which will be described later) of the pipe joint 40, the inside of the pipe joint 40 communicates with the flow path 22 via the connection port 24. In a state in which the connection port 24 is inserted into the insertion target portion 42, the refrigerant is sent from the pipe joint 40 to the flow path 22 through the connection port 24. Alternatively, the refrigerant is sent from the flow path 22 to the pipe joint 40 through the connection port 24. In Figs. 3 and 4, a protruding direction of the connection port 24 is indicated by a reference sign PD.

### (Retaining Portion 26)

As illustrated in Figs. 3 and 4, the retaining portion 26 is provided at the front surface 20A of the connection target object 20. The retaining portion 26 is formed by, for example, a plate member made of metal. In the present embodiment, as an example, both flange portions 30 of a processed member obtained by processing a metal plate into a hat shape are bonded (for example, welded) to the front surface 20A, thereby forming the retaining portion 26 (see Fig. 4). The retaining portion 26 has an opening 28 in which the connection port 24 is disposed. Specifically, the opening 28 is formed in a top plate portion 34 joining both vertical wall portions 32 of the processed member. The top plate portion 34 is disposed away from the front surface 20A in the protruding direction PD of the connection port 24. The insertion target portion 42 (which will be described later) of the pipe joint 40 passes through the opening 28.

As illustrated in Figs. 3 and 4, among edge portions of the opening 28 of the retaining portion 26, an edge portion on the side opposite to the front surface 20A is referred to as a first edge portion 28A. An edge portion of the opening 28 on the side opposite to the first edge portion 28A, that is, an edge portion on the front surface 20A side is referred to as a second edge portion 28B. The shape of the opening 28 will be described later.

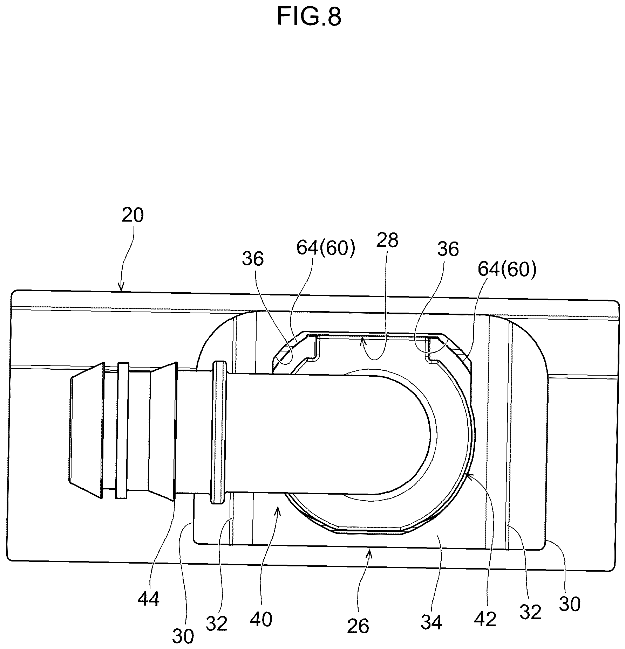

As illustrated in Fig. 8, in a state in which the pipe joint 40 is connected to the connection target object 20, an outer peripheral portion 26A of the retaining portion 26 is located further toward a radial direction outer side than an outer peripheral edge portion 60A of a retainer 60 as viewed from an opposite side from a protruding direction of the connection port 24. In the present embodiment, the outer peripheral portion 26A of the retaining portion 26 is an outer peripheral edge portion of the top plate portion 34.

As illustrated in Figs. 2 to 4, the front surface 20A of the connection target object 20 has a recess portion 21A and a general portion 21B around the recess portion 21A. The connection port 24 protrudes from the bottom surface of the recess portion 21A. The retaining portion 26 is provided at the general portion 21B. The depth of the recess portion 21A can be set to, for example, 1/4 or more of the inner diameter of the connection port 24. In a case in which the depth of the recess portion 21A is set to 1/4 or more of the inner diameter of the connection port 24, an influence on a fluid flowing through the flow path 22 of the connection target object 20 is reduced.

As illustrated in Fig. 3, a distance L1 of the distal end 24A of the connection port 24 from the front surface 20A is equal to or less than a distance of the first edge portion 28A of the opening 28 from the front surface 20A. Specifically, the distance L1 between the distal end of the connection port 24 and the bottom surface of the recess portion 21A along the protruding direction PD is equal to or less than a distance L2 between the first edge portion 28A of the opening 28 and the bottom surface of the recess portion 21A along the protruding direction PD.

### <Pipe Joint 40>

As illustrated in Figs. 1 and 3, the pipe joint 40 is a pipe joint that joins the connection target object 20 and a pipe (not illustrated). As an example, the pipe joint 40 in the present embodiment is an L-shaped pipe joint.

As illustrated in Figs. 2 and 4, the pipe joint 40 includes the insertion target portion 42, a pipe connection portion 44, an O-ring 50, a top hat 52, and the retainer 60.

### (Insertion Target Portion 42)

As illustrated in Figs. 2 and 4, the insertion target portion 42 is a part into which the connection port 24 is inserted, and constitutes one end side of the L-shaped pipe joint 40 in the axial direction. A recess portion 43 extending in the circumferential direction is provided at the outer periphery of the insertion target portion 42. The retainer 60 is accommodated in the recess portion 43.

### (Pipe Connection Portion 44)

As illustrated in Figs. 1 and 3, the pipe connection portion 44 is a part to which a pipe (not illustrated) is connected, and constitutes another end side of the L-shaped pipe joint 40 in the axial direction. Examples of the pipe connected to the pipe connection portion 44 include a resin tube (resin pipe).

### (O-ring 50)

As illustrated in Fig. 3, the O-ring 50 is disposed in the insertion target portion 42. In a case in which the connection port 24 is inserted into the insertion target portion 42, the inner peripheral portion of the O-ring 50 comes into contact with the outer peripheral surface of the connection port 24, the outer peripheral portion of the O-ring 50 comes into contact with the inner peripheral surface of the insertion target portion 42, and a space between the connection port 24 and the insertion target portion 42 is sealed by the O-ring 50.

As illustrated in Fig. 3, in a state in which the pipe joint 40 is connected to the connection target object 20, at least a part of the O-ring 50 is disposed between the first edge portion 28A and the distal end of the insertion target portion 42 in an axial direction XD of the insertion target portion 42. Specifically, the O-ring 50 is disposed to overlap the retainer 60 in the axial direction XD on the radial direction inner side of the retainer 60. The O-ring 50 is disposed to partially or entirely overlap the retainer 60 in the axial direction XD. In a state in which the O-ring 50 overlaps the retainer 60 in the axial direction XD, the O-ring 50 and the retainer 60 overlap in a case of being viewed from the radial direction of the retainer 60.

### (Top Hat 52)

As illustrated in Figs. 2 and 3, the top hat 52 is an annular member, is inserted into the distal end side of the insertion target portion 42, and is mounted at an inner side of the insertion target portion 42. The top hat 52 functions as a stopper of the O-ring 50 in a case of being mounted at the inner side of the insertion target portion 42.

### (Retainer 60)

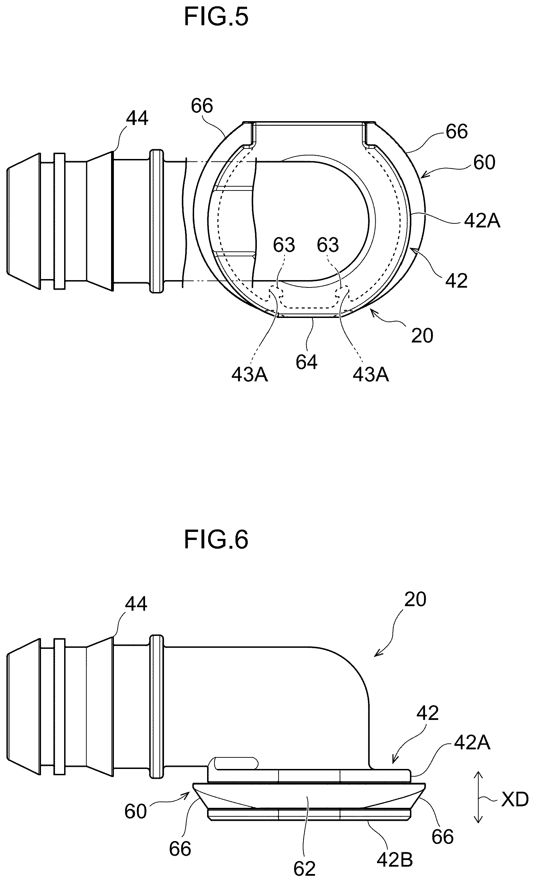

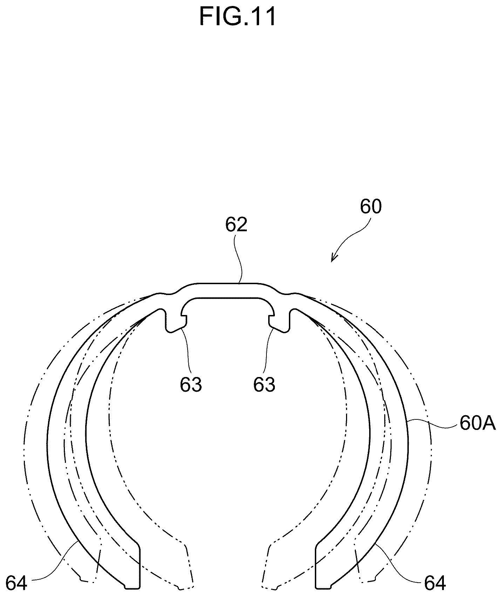

As illustrated in Figs. 2 and 11, the retainer 60 is formed in a partially cut annular shape. As illustrated in Fig. 3, the retainer 60 is mounted to the recess portion 43 provided at the outer periphery of the insertion target portion 42 in a diameter-reducible state. Specifically, as illustrated in Fig. 2, the retainer 60 has a central portion 62 in the longitudinal direction and curved portions 64 on both sides of the central portion 62 with the central portion 62 interposed between the curved portions 64. As illustrated in Figs. 2 and 11, the central portion 62 is provided with a pair of hook portions 63 protruding radial direction inward. As illustrated in Fig. 5, the pair of hook portions 63 are respectively hooked on hooking target portions 43A respectively provided at the recess portions 43, whereby it is possible to prevent an occurrence of a situation in which the retainer 60 rotates about the axis of the insertion target portion 42 in the recess portion 43. As illustrated in Fig. 11, the pair of curved portions 64 elastically deform such that the diameter of the retainer 60 can be extended and reduced. In Fig. 11, the retainer 60 in an unloaded state is indicated by a solid line, and the retainers 60 in a diameter-reduced state and a diameter-extended state are indicated by two-dot chain lines. The retainer 60 may be made of metal or resin, and is preferably set to be made of resin from the viewpoint of weight reduction.

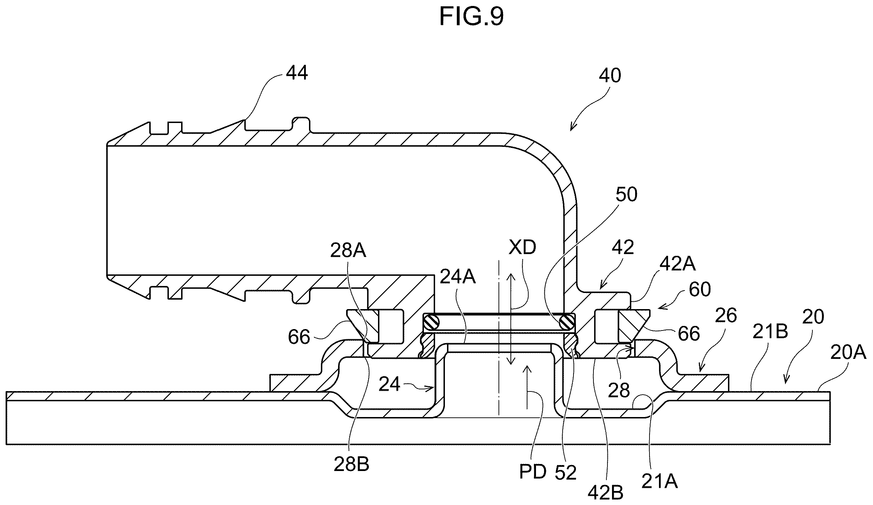

As illustrated in Fig. 9, in a case in which the insertion target portion 42 passes through the opening 28, the retainer 60 abuts the first edge portion 28A of the opening 28, and the diameter of the retainer is reduced. Here, the retainer 60 has a tapered surface 66 whose diameter decreases toward the distal end of the insertion target portion 42, and the tapered surface 66 abuts the first edge portion 28A. An inclination angle of the tapered surface 66 is preferably set to 45 or more.

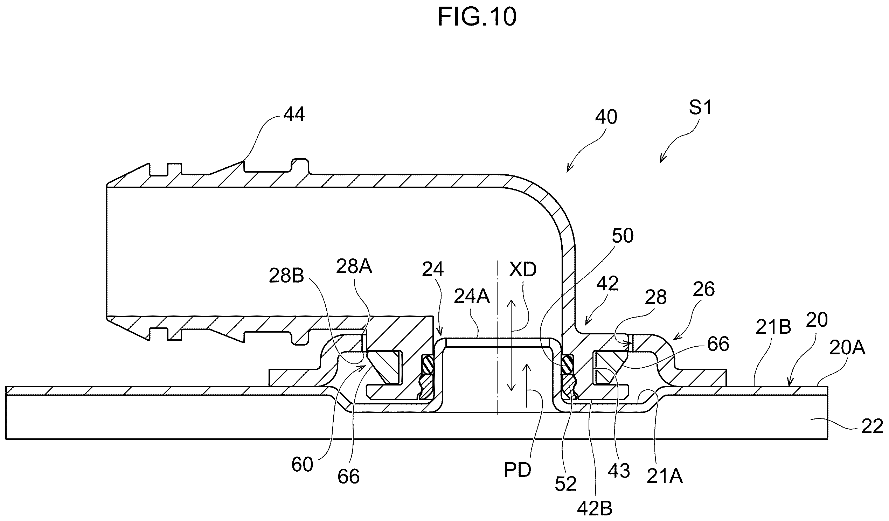

As illustrated in Fig. 3, the retainer 60 is restored in a case in which the connection port 24 is inserted into the insertion target portion 42 and passes through the opening 28. In a case in which a force in a pull-out direction acts on the insertion target portion 42, the retainer 60 is hooked on the second edge portion 28B of the opening 28 and holds a connection state between the insertion target portion 42 and the connection port 24. As illustrated in Fig. 10, for example, by reducing the diameter of the retainer 60 using a dedicated jig, the insertion target portion 42 can be removed from the connection port 24.

A mounting position of the retainer 60 in the present embodiment with respect to the insertion target portion 42 is set such that the retainer 60 is disposed between the front surface 20A of the connection target object 20 and the distal end 24A of the connection port 24 in a state in which the retainer is connected to the pipe joint 40 and the connection target object 20.

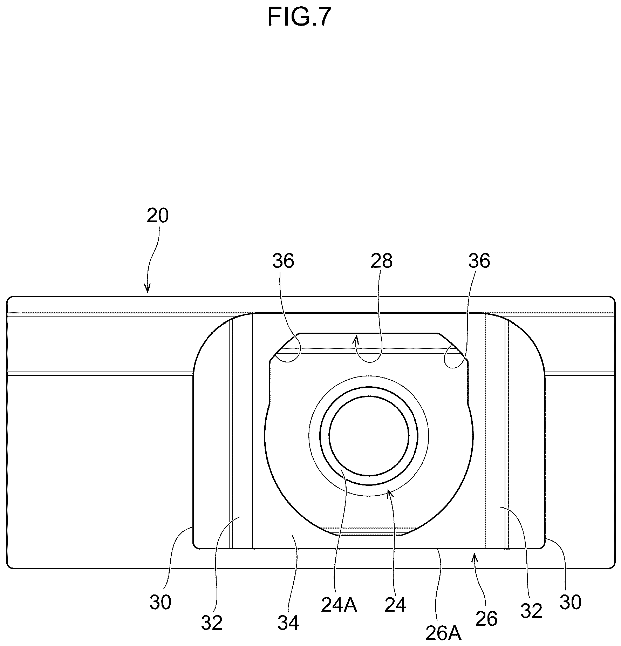

As illustrated in Figs. 7 and 8, a checking portion 36 for checking a restoration state of the retainer 60 is formed in the opening 28 of the retaining portion 26. Specifically, the checking portion 36 is a notch portion provided at the opening 28, and is formed at each of positions corresponding to respective ends of the retainer 60 (the distal end of the curved portion 64).

As illustrated in Fig. 8, the shape of the opening 28 of the retaining portion 26 and the outer peripheral shape (bottom surface shape) of the insertion target portion 42 are different from each other. Specifically, in a state in which the pipe joint 40 is connected to the connection target object 20, the shape of a part of the insertion target portion 42 corresponding to the opening 28 is different from the shape of the opening 28. Therefore, in a case in which the insertion target portion 42 rotates about the axis, the outer peripheral surface 42A of the insertion target portion 42 abuts a wall surface 28C of the opening 28, and the rotation of the insertion target portion 42 is prevented.

The connection structure S1 in the disclosure includes the connection port 24, the insertion target portion 42, the O-ring 50, the retaining portion 26, and the retainer 60.

Next, an action of the present embodiment will be described.

In the connection structure S1 in the present embodiment, as illustrated in Fig. 9, in a case in which the insertion target portion 42 of the pipe joint 40 is caused to pass through the opening 28 of the retaining portion 26, the retainer 60 mounted at the outer periphery of the insertion target portion 42 in a diameter-reducible state abuts the first edge portion 28A of the opening 28, and the diameter of the retainer is reduced. In a case in which the retainer 60 in the diameter-reduced state passes through the opening 28 of the retaining portion 26, the retainer 60 in the diameter-reduced state is restored in a state in which the connection port 24 is inserted to a predetermined position of the insertion target portion 42. As illustrated in Fig. 3, the restored retainer 60 is hooked by the second edge portion 28B of the opening 28, thereby being held between the front surface 20A of the connection target object 20 and the retaining portion 26. As a result, the connection state between the insertion target portion 42 on which the retainer 60 is mounted and the connection port 24 is held.

Here, in the connection structure S1, since the retainer 60 is made to have a partially cut annular shape, the diameter of the retainer 60 can be reduced by elastically deforming the retainer 60 radial direction inward. In a case of using such a retainer 60, for example, as compared with a configuration in which a plurality of elastic arms extending in the axial direction of the pipe joint are bent to narrow the interval between the distal ends of the plurality of elastic arms, it is possible to set the length of the insertion target portion 42 in the axial direction XD to be short. Specifically, in a case in which the length of the insertion target portion 42 in the axial direction XD is set, the length of the insertion target portion 42 in the axial direction XD can be set short because the thickness of the retainer 60 only needs to be considered. Thus, according to the connection structure S1, it is possible to reduce the protrusion height of the pipe joint 40 from the connection target object 20.

In the connection structure S1, instead of providing a spool in the connection port 24, the retaining portion 26 having the opening 28 in which the connection port 24 is disposed on the inner side is provided at the connection target object 20. The connection structure S1 is a structure in which the retainer 60 is hooked on the second edge portion 28B of the opening 28 of the retaining portion 26. Thus, in the connection structure S1, for example, as compared with a structure in which the connection port 24 is provided with the spool, it is possible to shorten (reduce) the axial length (in other words, the protrusion height) of the connection port 24 by the length of the spool. As a result, it is possible to set the axial length of the insertion target portion 42 of the pipe joint 40 to be short, and it is possible to reduce the protrusion height of the pipe joint 40 from the connection target object 20.

In the connection structure S1, as illustrated in Fig. 9, in a case in which the insertion target portion 42 is caused to pass through the opening 28 of the retaining portion 26, the tapered surface 66 of the retainer 60 abuts the first edge portion 28A of the opening 28. Here, since the tapered surface 66 of the retainer 60 is a tapered surface whose diameter decreases toward the distal end 42B of the insertion target portion 42, it is easy to reduce the diameter of the retainer 60. As a result, it is possible to reduce insertion resistance in a case in which the connection port 24 is inserted into the insertion target portion 42.

In the connection structure S1, since the distance L1 of the distal end 24A of the connection port 24 from the front surface 20A is set to be equal to or less than the distance L2 of the first edge portion 28A of the opening 28 from the front surface 20A, it is possible to protect a part of the connection port 24 in contact with the O-ring 50 as compared with, for example, a configuration in which the distal end 24A of the connection port 24 protrudes from the first edge portion 28A of the opening 28. With this protection, it is possible to suppress generation of burrs and the like due to damage to the outer periphery of the connection port 24. As a result, it is possible to suppress damage to the O-ring 50 in a case in which the connection port 24 is inserted into the O-ring 50.

In the connection structure S1, since at least a part of the O-ring 50 is disposed between the first edge portion 28A of the opening 28 and the distal end 42B of the insertion target portion 42 in the axial direction XD of the insertion target portion 42, it is possible to set the length of the insertion target portion 42 in the axial direction XD to be short as compared with, for example, a configuration in which the O-ring 50 is disposed on the opposite side of the distal end 42B of the insertion target portion 42 with respect to the first edge portion 28A of the opening 28.

In the connection structure S1, since the O-ring 50 is disposed to overlap the retainer 60 in the axial direction XD on the radial direction inner side of the retainer 60, it is possible to set the length of the insertion target portion 42 in the axial direction XD to be short as compared with, for example, a configuration in which the O-ring 50 does not overlap the retainer 60 in the axial direction XD.

In the connection structure S1, since the retaining portion 26 is made of metal, as compared with, for example, a configuration in which a material softer than metal is used, it is possible to maintain rigidity even though the thickness of the retaining portion 26 is reduced. In a case in which the thickness of the retaining portion 26 is reduced as described above, the length of the insertion target portion 42 in the axial direction XD can be set to be short.

In the connection structure S1, since the connection port 24 protrudes from the bottom surface of the recess portion 21A, it is possible to reduce the protrusion height of the connection port 24 with respect to the general portion 21B as compared with, for example, a configuration in which the connection port 24 protrudes from the general portion 21B. As a result, it is possible to set the length of the insertion target portion 42 in the axial direction XD to be short.

In the connection structure S1, in a case of being viewed from the side opposite to the protruding direction PD of the connection port 24, the outer peripheral portion 26A of the retaining portion 26 is located further toward a radial direction outer side than the outer peripheral edge portion 60A of the retainer 60. Thus, the retainer 60 is protected by the retaining portion 26. As a result, as compared with, for example, a configuration in which at least a part of the outer peripheral edge portion 60A of the retainer 60 is located further toward a radial direction outer side than the outer peripheral portion 26A of the retaining portion 26, it is possible to suppress the damage of the retainer 60 and to maintain the connection state between the insertion target portion 42 and the connection port 24 for a long time.

In the connection structure S1, both ends of the retainer 60 can be visually observed from the checking portion 36 of the opening 28. Therefore, it is possible to visually check the restoration state of the retainer 60. That is, it is possible to check the connection status between the insertion target portion 42 and the connection port 24 through the checking portion 36 of the opening 28.

In the connection structure S1, in a case in which the insertion target portion 42 rotates about the axis, the outer peripheral surface 42A of the insertion target portion 42 abuts a wall surface 28C of the opening 28, and the rotation of the insertion target portion 42 is prevented. As a result, it is possible to suppress an occurrence of a situation in which the pipe connected to the pipe joint 40 rotates with the insertion target portion 42 as a starting point.

In the connection structure S1, one end side of the L-shaped pipe joint 40 in the axial direction configures the insertion target portion 42, and another end side in the axial direction configures the pipe connection portion 44 for pipe connection. Therefore, by suppressing the protrusion height of the pipe joint 40 from the connection target object 20, it is possible to suppress the height (distance) of the pipe connected to the pipe connection portion 44 from the connection target object 20.

In the above-described embodiment, the tapered surface 66 is formed in the retainer 60, but the disclosure is not limited to this configuration. The first edge portion of the opening 28 may be made as a tapered surface instead of the retainer 60. A configuration in which the first edge portion made as the tapered surface of the opening 28 is in contact with the tapered surface 66 of the retainer 60 may be adopted.

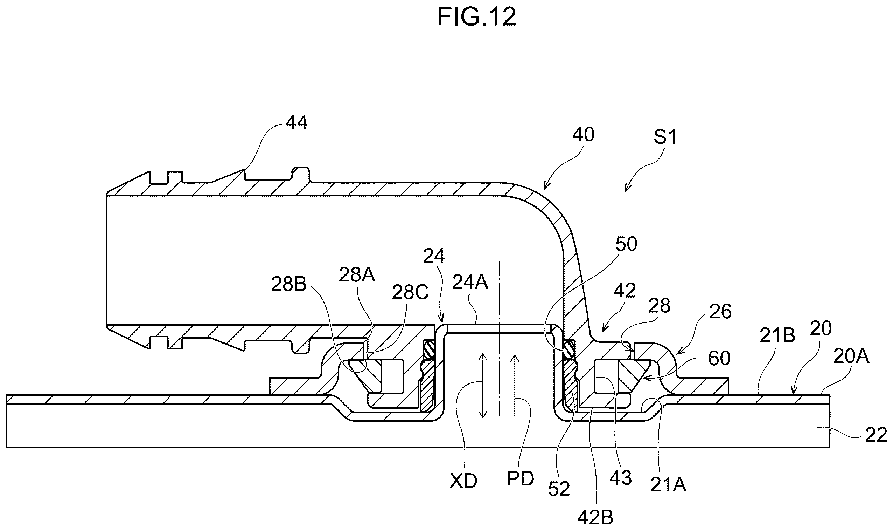

In the above-described embodiment, the O-ring 50 is disposed radial direction inward of the retainer 60, but the disclosure is not limited to this configuration. For example, as illustrated in Fig. 12, at least a part of the O-ring 50 may be disposed between the first edge portion 28A and the distal end 42B of the insertion target portion 42 in the axial direction XD of the insertion target portion 42.

Although the embodiments of the disclosure have been described above with reference to the embodiments, these embodiments are merely examples, and various modifications can be made without departing from the scope of the disclosure. It goes without saying that the scope of rights of the disclosure is not limited to these embodiments.

Regarding the above embodiments, the following supplementary notes are further disclosed.

### (Supplementary note 1)

A pipe joint connection structure for connecting a pipe joint to a connection target object having an internal flow path, the connection structure including:
a connection port that has a tubular shape and protrudes from a front surface of the connection target object;
an insertion target portion that has a tubular shape and is provided at the pipe joint, and into which the connection port is inserted;
a seal member that is disposed in the insertion target portion and seals a space between the connection port and the insertion target portion;
a retaining portion that is provided at the front surface of the connection target object and has an opening at an inner side of which the connection port is disposed; and
a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.

In the pipe joint connection structure in Supplementary note 1, in a case in which the insertion target portion of the pipe joint is caused to pass through the opening of the retaining portion, the holding member mounted at the outer periphery of the insertion target portion in a diameter-reducible state abuts the first edge portion of the opening of the retaining portion, and the diameter is reduced. In a case in which the holding member in the diameter-reduced state passes through the opening of the retaining portion, the holding member in the diameter-reduced state is restored in a state in which the connection port is inserted to a predetermined position of the insertion target portion. The restored holding member is hooked by the second edge portion of the opening, thereby being held between the front surface of the connection target object and the retaining portion. As a result, the connection state between the insertion target portion on which the holding member is mounted and the connection port is held.

Here, in the pipe joint connection structure, since the holding member has a partially cut annular shape, the diameter of the holding member can be reduced by elastically deforming the holding member radial direction inward. In a case of using such a holding member, for example, as compared with a configuration in which a plurality of elastic arms extending in the axial direction of the pipe joint are bent to narrow the interval between the distal ends of the plurality of elastic arms, it is possible to set the length of the insertion target portion in the axial direction to be short.

Thus, according to the pipe joint connection structure, it is possible to reduce the protrusion height of the pipe joint from the connection target object.

In the pipe joint connection structure, instead of providing a spool in the connection port, the retaining portion having the opening at an inner side of which the connection port is disposed is provided at the connection target object. The pipe joint connection structure is a structure in which the holding member is hooked on the edge portion of the opening of the retaining portion. Thus, in the pipe joint connection structure, for example, as compared with a structure in which the connection port is provided with the spool, it is possible to shorten (reduce) the axial length (in other words, the protrusion height) of the connection port by the length of the spool. As a result, it is possible to set the axial length of the insertion target portion of the pipe joint to be short, and it is possible to reduce the protrusion height of the pipe joint from the connection target object.

### (Supplementary note 2)

A pipe joint connection structure for connecting a pipe joint to a connection target object having an internal flow path, the connection structure including:
a connection port that has a tubular shape and protrudes from a front surface of the connection target object;
an insertion target portion that has a tubular shape and is provided at the pipe joint, and into which the connection port is inserted;
a retaining portion that is provided at the front surface of the connection target object and has an opening at an inner side of which the connection port is disposed;
a holding member that is disposed between the front surface of the connection target object and a distal end of the connection port, is mounted at an outer periphery of the insertion target portion, and holds a connection state between the insertion target portion and the connection port by being hooked on an edge portion of the opening; and
a seal member that is disposed to overlap with the holding member in an axial direction at a radial direction inner side of the holding member and that seals a space between the insertion target portion and the connection port in the insertion target portion.

In the pipe joint connection structure in Supplementary note 2, in a case in which the insertion target portion of the pipe joint is caused to pass through the opening of the retaining portion, the holding member mounted at the outer periphery of the insertion target portion is hooked on the edge portion of the opening of the retaining portion. As a result, the connection state between the insertion target portion on which the holding member is mounted and the connection port is held.

Here, in the pipe joint connection structure, the holding member is disposed between the front surface of the connection target object and the distal end of the connection port, and the seal member is disposed to overlap with the holding member in the axial direction at the radial direction inner side of the holding member. Therefore, in the pipe joint connection structure, it is possible to set the axial length of the insertion target portion to be short as compared with, for example, a configuration in which the seal member does not overlap with the holding member in the axial direction.

Thus, according to the pipe joint connection structure, it is possible to reduce the protrusion height of the pipe joint from the connection target object.

In the pipe joint connection structure, instead of providing a spool in the connection port, the retaining portion having the opening at an inner side of which the connection port is disposed is provided at the connection target object. The pipe joint connection structure is a structure in which the holding member is hooked on the edge portion of the opening of the retaining portion. Thus, in the pipe joint connection structure, for example, as compared with a structure in which the connection port is provided with the spool, it is possible to shorten (reduce) the axial length (in other words, the protrusion height) of the connection port by the length of the spool. As a result, it is possible to set the axial length of the insertion target portion of the pipe joint to be short, and it is possible to reduce the protrusion height of the pipe joint from the connection target object.

### (Supplementary note 3)

The pipe joint connection structure according to Supplementary note 1 or 3, in which:
the holding member has a tapered surface whose diameter decreases toward a distal end of the insertion target portion, and
the tapered surface abuts the first edge portion.

In the pipe joint connection structure in Supplementary note 3, in a case in which the insertion target portion is caused to pass through the opening of the retaining portion, the tapered surface of the holding member abuts the first edge portion of the opening. Here, since the tapered surface of the holding member is a tapered surface whose diameter decreases toward the distal end of the insertion target portion, it is easy to reduce the diameter of the holding member. As a result, it is possible to reduce insertion resistance in a case in which the connection port is inserted into the insertion target portion.

### (Supplementary note 4)

The pipe joint connection structure according to Supplementary note 1 or 3, in which a distance of a distal end of the connection port from the front surface is equal to or less than a distance of the first edge portion from the front surface.

In the pipe joint connection structure in Supplementary note 4, since the distance of the distal end of the connection port from the front surface is set to be equal to or less than the distance of the first edge portion of the retaining portion from the front surface, it is possible to protect the part of the connection port in contact with the seal member as compared with, for example, a configuration in which the distal end of the connection port protrudes from the first edge portion of the retaining portion. As a result, it is possible to suppress damage to the seal member in a case in which the connection port is inserted into the seal member.

### (Supplementary note 5)

The pipe joint connection structure according to any one of Supplementary notes 1, 3, and 4, in which at least a part of the seal member is disposed between the first edge portion and a distal end of the insertion target portion, in an axial direction of the insertion target portion.

In the pipe joint connection structure in Supplementary note 5, since at least a part of the seal member is disposed between the first edge portion of the opening and the distal end of the insertion target portion in the axial direction of the insertion target portion, it is possible to set the length of the insertion target portion in the axial direction to be short as compared with, for example, a configuration in which the seal member is disposed on the opposite side of the distal end of the insertion target portion with respect to the first edge portion of the opening.

### (Supplementary note 6)

The pipe joint connection structure according to any one of Supplementary notes 1, 3, and 4, in which the seal member is disposed to overlap with the holding member in an axial direction at a radial direction inner side of the holding member.

In the pipe joint connection structure in Supplementary note 6, since the seal member is disposed to overlap with the holding member in the axial direction at the radial direction inner side of the holding member, it is possible to set the length of the insertion target portion in the axial direction to be short as compared with, for example, a configuration in which the seal member does not overlap with the holding member in the axial direction.

### (Supplementary note 7)

The pipe joint connection structure according to any one of Supplementary notes 1 to 6, in which the retaining portion is made of metal.

In the pipe joint connection structure in Supplementary note 7, since the retaining portion is set to be made of metal, as compared with, for example, a configuration in which a material softer than metal is used, it is possible to maintain rigidity even though the thickness of the retaining portion is reduced. In a case in which the thickness of the retaining portion is reduced as described above, it is possible to set the length of the insertion target portion in the axial direction to be short.

### (Supplementary note 8)

The pipe joint connection structure according to any one of Supplementary notes 1 to 7, in which:
the front surface includes a recess portion and a general portion around the recess portion, and
the connection port protrudes from a bottom surface of the recess portion.

In the pipe joint connection structure in Supplementary note 8, since the connection port protrudes from the bottom surface of the recess portion, it is possible to reduce the protrusion height of the connection port with respect to the general portion as compared with, for example, a configuration in which the connection port protrudes from the general portion. As a result, it is possible to set the length of the insertion target portion in the axial direction to be short.

### (Supplementary note 9)

The pipe joint connection structure according to any one of Supplementary notes 1 to 8, in which the retaining portion has a plate shape, and an outer peripheral portion that is located further toward a radial direction outer side than an outer peripheral edge portion of the holding member as viewed from an opposite side from a direction of protrusion of the connection port.

In the pipe joint connection structure in Supplementary note 9, in a case of being viewed from the side opposite to the protruding direction of the connection port, the outer peripheral portion of the retaining portion is located further toward a radial direction outer side than the outer peripheral edge portion of the holding member. Thus, the holding member is protected by the retaining portion. As a result, as compared with, for example, a configuration in which at least a part of the outer peripheral edge portion of the holding member is located further toward a radial direction outer side than the outer peripheral portion of the retaining portion, it is possible to suppress the damage of the holding member and to maintain the connection state between the insertion target portion and the connection port for a long time.

### (Supplementary note 10)

The pipe joint connection structure according to any one of Supplementary notes 1 to 9, in which a checking portion for checking a restoration state of the holding member is formed in the opening at positions corresponding to respective ends of the holding member.

In the pipe joint connection structure in Supplementary note 10, both ends of the holding member can be visually observed from the checking portion of the opening. Therefore, it is possible to visually check the restoration state of the holding member. That is, it is possible to check the connection status between the insertion target portion and the connection port through the checking portion of the opening.

### (Supplementary note 11)

The pipe joint connection structure according to any one of Supplementary notes 1 to 10, in which a shape of the opening and an outer peripheral shape of the insertion target portion are different from each other, and
in a case in which the insertion target portion rotates around an axis, an outer peripheral surface of the insertion target portion abuts a wall surface of the opening, thereby preventing rotation of the insertion target portion.

In the pipe joint connection structure in Supplementary note 11, in a case in which the insertion target portion rotates about the axis, the outer peripheral surface of the insertion target portion abuts a wall surface of the opening, and the rotation of the insertion target portion is prevented. As a result, it is possible to suppress an occurrence of a situation in which the pipe connected to the pipe joint rotates with the insertion target portion as a starting point.

### (Supplementary note 12)

The pipe joint connection structure according to any one of Supplementary notes 1 to 11, in which the pipe joint is an L-shaped pipe joint, one end side in an axial direction configures the insertion target portion, and another end side in the axial direction configures a pipe connection portion for pipe connection.

In the pipe joint connection structure in Supplementary note 12, one end side of the L-shaped pipe joint in the axial direction configures the insertion target portion, and another end side in the axial direction configures the pipe connection portion for pipe connection. Therefore, by suppressing the protrusion height of the pipe joint from the connection target object, it is possible to suppress the height (distance) of the pipe connected to the pipe connection portion from the connection target object.

### (Supplementary note 13)

A pipe joint connected to a connection target object that includes an internal flow path, a connection port that has a tubular shape and protrudes from a front surface, and a retaining portion that is provided at the front surface and has an opening at an inner side of which the connection port is disposed, the pipe joint including:
an insertion target portion that has a tubular shape and into which the connection port is inserted;
a seal member that is disposed in the insertion target portion and seals a space between the connection port and the insertion target portion; and
a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.

In the pipe joint in Supplementary note 13, in a case in which the insertion target portion of the pipe joint is caused to pass through the opening of the retaining portion, the holding member mounted at the outer periphery of the insertion target portion in a diameter-reducible state abuts the first edge portion of the opening of the retaining portion, and the diameter is reduced. In a case in which the holding member in the diameter-reduced state passes through the opening of the retaining portion, the holding member in the diameter-reduced state is restored in a state in which the connection port is inserted to a predetermined position of the insertion target portion. The restored holding member is hooked by the second edge portion of the opening, thereby being held between the front surface of the connection target object and the retaining portion. As a result, the connection state between the insertion target portion on which the holding member is mounted and the connection port is held.

Here, in the pipe joint, since the holding member has a partially cut annular shape, the diameter of the holding member can be reduced by elastically deforming the holding member radial direction inward. In a case of using such a holding member, for example, as compared with a configuration in which a plurality of elastic arms extending in the axial direction of the pipe joint are bent to narrow the interval between the distal ends of the plurality of elastic arms, it is possible to set the length of the insertion target portion in the axial direction to be short. Thus, according to the pipe joint, it is possible to reduce the protrusion height from the connection target object.

The disclosure of Japanese Patent Application No. 2023-086520 filed on May 25, 2023 is incorporated herein by reference in its entirety.

All documents, patent applications, and technical standards described in this specification are incorporated herein by reference to the same extent as if each individual document, patent application, and technical standard were specifically and individually indicated to be incorporated by reference.

## Claims

1. A pipe joint connection structure for connecting a pipe joint to a connection target object having an internal flow path, the connection structure comprising:
a connection port that has a tubular shape and protrudes from a front surface of the connection target object;
an insertion target portion that has a tubular shape and is provided at the pipe joint, and into which the connection port is inserted;
a seal member that is disposed in the insertion target portion and seals a space between the connection port and the insertion target portion;
a retaining portion that is provided at the front surface of the connection target object and has an opening at an inner side of which the connection port is disposed; and
a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.

2. A pipe joint connection structure for connecting a pipe joint to a connection target object having an internal flow path, the connection structure comprising:
a connection port that has a tubular shape and protrudes from a front surface of the connection target object;
an insertion target portion that has a tubular shape and is provided at the pipe joint, and into which the connection port is inserted;
a retaining portion that is provided at the front surface of the connection target object and has an opening at an inner side of which the connection port is disposed;
a holding member that is disposed between the front surface of the connection target object and a distal end of the connection port, is mounted at an outer periphery of the insertion target portion, and holds a connection state between the insertion target portion and the connection port by being hooked on an edge portion of the opening; and
a seal member that is disposed to overlap with the holding member in an axial direction at a radial direction inner side of the holding member and that seals a space between the insertion target portion and the connection port in the insertion target portion.

3. The pipe joint connection structure according to claim 1, wherein:
the holding member has a tapered surface whose diameter decreases toward a distal end of the insertion target portion, and
the tapered surface abuts the first edge portion.

4. The pipe joint connection structure according to claim 1 or 3, wherein a distance of a distal end of the connection port from the front surface is equal to or less than a distance of the first edge portion from the front surface.

5. The pipe joint connection structure according to any one of claims 1, 3, and 4, wherein at least a part of the seal member is disposed between the first edge portion and a distal end of the insertion target portion, in an axial direction of the insertion target portion.

6. The pipe joint connection structure according to any one of claims 1, 3, and 4, wherein the seal member is disposed to overlap with the holding member in an axial direction at a radial direction inner side of the holding member.

7. The pipe joint connection structure according to any one of claims 1 to 6, wherein the retaining portion is made of metal.

8. The pipe joint connection structure according to any one of claims 1 to 7, wherein:
the front surface includes a recess portion and a general portion around the recess portion, and
the connection port protrudes from a bottom surface of the recess portion.

9. The pipe joint connection structure according to any one of claims 1 to 8, wherein the retaining portion has a plate shape, and an outer peripheral portion that is located further toward a radial direction outer side than an outer peripheral edge portion of the holding member as viewed from an opposite side from a direction of protrusion of the connection port.

10. The pipe joint connection structure according to any one of claims 1 to 9, wherein a checking portion for checking a restoration state of the holding member is formed in the opening at positions corresponding to respective ends of the holding member.

11. The pipe joint connection structure according to any one of claims 1 to 10, wherein a shape of the opening and an outer peripheral shape of the insertion target portion are different from each other, and
in a case in which the insertion target portion rotates around an axis, an outer peripheral surface of the insertion target portion abuts a wall surface of the opening, thereby preventing rotation of the insertion target portion.

12. The pipe joint connection structure according to any one of claims 1 to 11, wherein the pipe joint is an L-shaped pipe joint, one end side in an axial direction configures the insertion target portion, and another end side in the axial direction configures a pipe connection portion for pipe connection.

13. A pipe joint connected to a connection target object that includes an internal flow path, a connection port that has a tubular shape and protrudes from a front surface, and a retaining portion that is provided at the front surface and has an opening at an inner side of which the connection port is disposed, the pipe joint comprising:
an insertion target portion that has a tubular shape and into which the connection port is inserted;
a seal member that is disposed in the insertion target portion and seals a space between the connection port and the insertion target portion; and
a holding member that has a partially cut annular shape, is mounted at an outer periphery of the insertion target portion in a diameter-reducible state, abuts a first edge portion of the opening and is reduced in diameter in a case in which the insertion target portion is passed through the opening, and holds a connection state between the insertion target portion and the connection port by being restored in a case in which the connection port is inserted into the insertion target portion and being hooked on a second edge portion of the opening at an opposite side from the first edge portion.
